(19) **Europäisches Patentamt / European Patent Office / Office européen des brevets**

(11) **EP 1 790 407 B1**

(12) **EUROPEAN PATENT SPECIFICATION**

(45) Date of publication and mention
of the grant of the patent:
**28.02.2018 Bulletin 2018/09**

(51) Int Cl.:
**B01D 39/20** (2006.01)     **B01J 35/04** (2006.01)
**B01J 35/10** (2006.01)     **C04B 38/00** (2006.01)

(21) Application number: **05783198.4**

(22) Date of filing: **14.09.2005**

(86) International application number:
**PCT/JP2005/016909**

(87) International publication number:
**WO 2006/030811 (23.03.2006 Gazette 2006/12)**

(54) **POROUS HONEYCOMB FILTER**

PORÖSES WABENFILTER

FILTRE POREUX EN NID D'ABEILLES

(84) Designated Contracting States:
**DE FR PL**

(30) Priority: **14.09.2004  JP 2004267003**

(43) Date of publication of application:
**30.05.2007  Bulletin 2007/22**

(73) Proprietor: **NGK Insulators, Ltd.**
**Nagoya-shi, Aichi 467-8530 (JP)**

(72) Inventors:
• **OTSUKA, Aiko,**
**c/o NGK INSULATORS, LTD.**
**Nagoya-shi,**
**Aichi 467-8530 (JP)**

• **ICHIKAWA, Shuichi,**
**c/o NGK INSULATORS, LTD.**
**Nagoya-shi,**
**Aichi 467-8530 (JP)**

(74) Representative: **Naylor, Matthew John et al**
**Mewburn Ellis LLP**
**City Tower**
**40 Basinghall Street**
**London EC2V 5DE (GB)**

(56) References cited:
EP-A1- 1 342 494     EP-A2- 1 293 241
WO-A1-02/096827     WO-A1-03/082771
JP-A- 8 215 522     JP-A- 2002 143 615
JP-A- 2003 040 687     JP-A- 2004 148 308
JP-A- 2004 250 324     US-B1- 6 582 796

**Description**

Technical Field

The present invention relates to a porous honeycomb filter, more particularly to a porous honeycomb filter capable of balancing a trapping efficiency of particulates and a pressure loss.

Background Art

As a method of trapping and removing particulates discharged from a diesel engine, a method of incorporating a diesel particulate filter (DPF) into an exhaust system of the diesel engine is put to practical use. This DPF is a porous honeycomb filter having a predetermined shape, or is prepared by bonding a plurality of porous honeycomb filters.

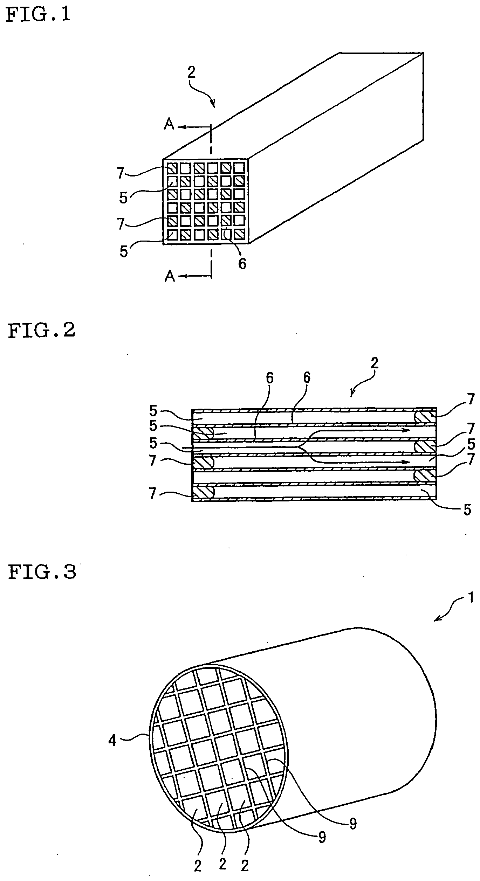

FIGS. 1 and 2 show a porous honeycomb filter 2 for use in the DPF. This porous honeycomb filter 2 is molded into a cylindrical shape having a square section, and has therein a large number of circulation holes 5 defined by partition walls 6. Each partition wall 6 has a porous structure in which a large number of pores are distributed, and accordingly a gas can pass through the partition walls 6.

The circulation holes 5 extend through the filter 2 in an axial direction, and end portions of the adjacent circulation holes 5 are alternately plugged with a filling material 7. That is, a left end portion of one circulation hole 5 is opened whereas a right end portion of the hole is plugged with the filling material 7. As to another circulation hole 5 adjacent to this hole, a left end portion is plugged with the filling material 7, but a right end portion is opened. Since such plugging is performed, each end face of the porous honeycomb filter 2 has a checkered pattern as shown in FIG. 1.

It is to be noted that the porous honeycomb filter 2 may be formed into an appropriate sectional shape other than a square section, such as a triangular or hexagonal section. Even the sectional shape of the circulation hole 5 may be formed into a shape such as a triangular, hexagonal, circular, or elliptic shape.

FIG. 3 shows a DPF 1 as a filter prepared by bonding a plurality of the above-described porous honeycomb filters 2. The plurality of porous honeycomb filters 2 are bonded to one another so that the filters are adjacent to one another via bonding materials 9. After bonding the filters by the bonding materials 9, the filters are ground into a section such as a circular, elliptic, or triangular shape, and an outer peripheral surface of the filter is coated with a coating material 4. When this DPF 1 is disposed in a channel of an exhaust gas of a diesel engine, it is possible to trap particulates including soot, SOF and the like discharged from the diesel engine.

That is, in a case where the DPF 1 is disposed in the channel of the exhaust gas, the exhaust gas flows from a left side of FIG. 2 into the circulation hole 5 of each porous honeycomb filter 2 to move toward a right side. In FIG. 2, the left side of the porous honeycomb filter 2 is an entrance of the exhaust gas, and the exhaust gas flows into the porous honeycomb filter 2 from the circulation hole 5 which is opened without being clogged. The exhaust gas which has flown into the circulation hole 5 flows out of another circulation hole through the porous partition wall 6. Moreover, when the exhaust gas passes through the partition wall 6, particulates including the soot of the exhaust gas are trapped by the partition wall 6, so that the exhaust gas can be purified.

When the particulates stick to such porous honeycomb filter, a pressure loss increases. Therefore, it is necessary to adjust pore characteristics (porosity, average pore diameter, pore distribution) of the filter. However, the filter has a characteristic that its trapping efficiency drops when large pores increase as described later. Therefore, the trapping efficiency has a correlation with the pressure loss, and it is necessary to set the pore characteristic of the porous honeycomb filter so that the trapping efficiency is compatible with the pressure loss.

To solve the problem, in Japanese Patent No. 3272746, a porous honeycomb filter is disclosed in which an average value of pore diameters is in a range of 1 to 15 $\mu$m, and a standard deviation in a pore diameter distribution is 0.2 or less.

On the other hand, in recent years, an exhaust gas value has been severely regulated, and the porous honeycomb filter is allowed to carry a catalyst in order to clear this regulated value. When the catalyst is carried, combustibility of the particulates in the exhaust gas is improved, and it is also possible to improve a capability of purifying a toxic gas. In a case where such catalyst is carried, the pores in the porous honeycomb filter are easily clogged with the catalyst. Therefore, the trapping efficiency and the pressure loss are unsatisfactory with the above-described average value (average value of 1 to 15 $\mu$m) of the pore diameters.

On the other hand, in Japanese Patent Application Laid-Open No. 2002-219319, there is disclosed a porous honeycomb filter which is made of a material containing cordierite as a main component and in which a pore distribution is controlled so that a volume of pores having a pore diameter below 10 $\mu$m is 15% or less of a total pore volume, a volume of pores having a pore diameter of 10 to 50 $\mu$m is 75% or more of the total pore volume, and a volume of pores having a pore diameter in excess of 50 $\mu$m is 10% or less of the total pore volume.

Disclosure of the Invention

In a pore distribution by Japanese Patent Application Laid-Open No. 2002-219319, a pore volume is defined by a ratio to a total pore volume. Therefore, when the total pore volume fluctuates, a volume of pores having a specific diameter also fluctuates. Here, a porosity of the porous honeycomb filter is obtained by porosity = total pore volume/(total pore volume+1/true density). When the porosity increases, there also increases a volume of pores having a certain diameter, for example, a pore diameter of 40 $\mu$m or more.

However, it has been found that a trapping efficiency of particulates sometimes drops when the pore diameter increases and that the trapping efficiency degrades especially in a case where the volume of pores having a diameter of 40 $\mu$m or more increases.

The present invention has been developed in consideration of such conventional problem, and an object is to provide a porous honeycomb filter whose trapping efficiency does not drop even when the porosity, that is, the total pore volume fluctuates and which is capable of balancing the trapping efficiency and a pressure loss.

To achieve the above-described object, the honeycomb filter as set out in claim 1 is provided by the invention.

Preferably the permeability is 1.5 $\mu$m$^2$ or more.

Preferably a catalyst is carried.

The porous honeycomb filter is clogged with the catalyst carried by pores having a pore diameter of 15 $\mu$m or less, which is a cause for an increase in pressure loss. On the other hand, pores having a pore diameter of 40 $\mu$m or more cause a drop in trapping efficiency. In the honeycomb filter of the present invention, since the volume of the pores having a pore diameter of 15 $\mu$m or less is 0.07 cc/cc or less, and the volume of the pores having a pore diameter of 40 $\mu$m or more is 0.07 cc/cc or less, the pressure loss and the trapping efficiency can be balanced.

Moreover, in the honeycomb filter of the present invention, since both of the volumes of the pores having small and large pore diameters are defined by absolute values, the volumes of the pores having these diameters are not related to the total pore volume. Even when the total pore volume fluctuates, the volumes of the pores having these diameters do not fluctuate, and therefore the trapping efficiency of the filter as a whole does not drop.

Brief Description of the Drawings

FIG. 1 is a perspective view of one example of a porous honeycomb filter;
FIG. 2 is a sectional view cut along the A-A line of FIG. 1;
FIG. 3 is a perspective view of one example of a DPF; and
FIG. 4 is a graph showing one example of a pore distribution.

Description of Reference Numerals

1: DPF;
2: porous honeycomb filter;
4: coating material;
5: circulation hole;
6: partition wall; and
7: filling material.

Best Mode for Carrying out the Invention

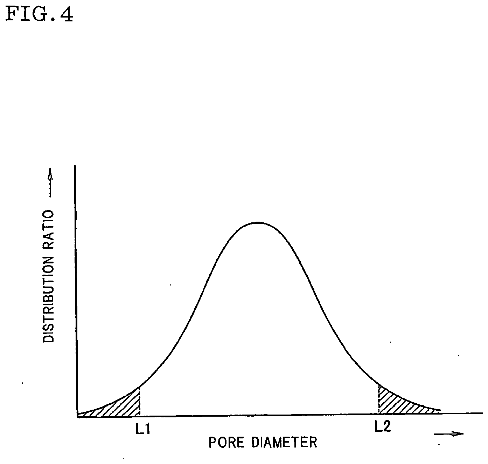

In a porous honeycomb filter of the present invention, a pore distribution is controlled. Moreover, a volume of pores having a pore diameter of 15 $\mu$m or less is 0.07 cc/cc or less, and a volume of pores having a pore diameter of 40 $\mu$m or more is 0.07 cc/cc or less. As shown in FIG. 4, the pore distribution is the Gauss distribution (normal distribution) in a case where pore diameters are plotted along the abscissa. A pore diameter L1 is 15 $\mu$m, and a pore diameter L2 is 40 $\mu$m.

In a case where the pore diameter of the porous honeycomb filter is small, a pressure loss is large, but on the other hand, a trapping efficiency is improved. In a case where the pore diameter is large, the pressure loss is small, but on the other hand, the trapping efficiency drops. As a result of investigations by the present inventor, pores having the pore diameter L1 (L1 = 15 $\mu$m) or less are easily clogged with a carried catalyst. Therefore, the volume (hatching region on the left side in FIG. 4) of the pores having a pore diameter of 15 $\mu$m or less is set to 0.07 cc/cc or less. In a case where the volume of the pores having this diameter exceeds 0.07 cc/cc, a clogging ratio increases, and the pressure loss becomes extremely large. This is unfavorable for the filter.

On the other hand, the pores whose pore diameter is not less than L2 (L2 = 40 $\mu$m) lower the trapping efficiency. Therefore, the volume (hatching region on the right side in FIG. 4) of the pores having a pore diameter of 40 $\mu$m or more is set to 0.07 cc/cc or less. In a case where the volume of the pores having this diameter exceeds 0.07 cc/cc, the trapping efficiency excessively drops, and the filter does not function any more.

In the present invention, a unit cc/cc is a pore volume per unit volume, obtained by multiplying the pore volume (cc/g) obtained by pore characteristic measurement by a density (g/cc) of a material. This unit cc/cc is an absolute value. Therefore, since the pore volume is defined regardless of a total pore volume, the volume of the pores having the pore diameter of 15 $\mu$m or less and that of the pores having the pore diameter of 40 $\mu$m or more are 0.07 cc/cc or less as described above, and do not fluctuate even if the total pore volume fluctuates. Therefore, the trapping efficiency and the pressure loss can be equilibrated, and can be compatible with each other.

In the porous honeycomb filter of the present invention, the catalyst is preferably carried. Since the catalyst is carried, combustibility of particulates in an exhaust gas can be improved. Additionally, a capability of purifying a toxic gas can be improved.

As a catalyst for use, at least one type can be selected from the group consisting of: platinum metals such as Pt, Pd, and Rh; alkaline earth metal oxides such as magnesium oxide, calcium oxide, barium oxide, and strontium oxide; and alkali metal oxides such as lithium oxide, sodium oxide, potassium oxide, and cerium oxide.

The catalyst can be carried by immersing the molded porous honeycomb filter in a solution of a catalyst material, or spraying or applying the solution of the catalyst material, and thereafter drying the filter. Even in a case where the catalyst is carried in this manner, since the volume of the pores having the pore diameter of 15 $\mu$m or less is controlled into 0.07 cc/cc or less, the clogging ratio with the catalyst does not increase more than necessary, and deterioration due to the pressure loss can be prevented.

In the present invention, the porosity of the porous honeycomb filter is in a range of 40 to 75%, preferably 50 to 75%. When the porosity is less than 40%, the pressure loss of the exhaust gas unfavorably increases. With the porosity in excess of 75%, a mechanical strength of the porous honeycomb filter drops, and the filter cannot be practically used. It is to be noted that this porosity falls in a similar range even when the catalyst is carried.

As a more preferable example of the present invention, a permeability of the porous honeycomb filter is preferably 1.5 $\mu$m$^2$ or more. The permeability is generally related to the porosity and the pore diameter, but the permeability is also related to a shape and a communicability of the pore. In a case where the permeability is 1.5 $\mu$m$^2$ or more, the pressure loss can be reduced without deteriorating the trapping efficiency, and a high trapping efficiency can be achieved with a small pressure loss.

To control the pore distribution as in the present invention, a pore former may be added to a clay material as a filter material. As the pore former, one type or two or more types can be used among graphite, flour, starch, phenol resin, polymethyl methacrylate, polyethylene, polyethylene terephthalate, non-foam resin, foam resin, water-absorbing resin, albino balloon, fly ash balloon and the like. The pore distribution can be easily controlled by use of the pore former having a specific particle size distribution among such pore formers. For example, it is possible to easily manufacture the porous honeycomb filter having the pore distribution of the present invention by use of the pore former containing 10 mass% or less of particles having an average particle diameter of 5 to 50 $\mu$m and particle diameters of 100 $\mu$m or more, further preferably 5 mass% or less of particles having an average particle diameter of 10 to 45 $\mu$m and particle diameters of 100 $\mu$m or more, especially preferably 1 mass% or less of particles having an average particle diameter of 10 to 45 $\mu$m and particle diameters of 100 $\mu$m or more. It is to be noted that the particle diameter is based on a particle size measured value by a laser diffraction process.

An amount of this pore former to be added is appropriately selected in accordance with a type of the clay material for use, or a type or an amount of an additive, and the amount can be calculated by performing an experiment so that an area of the pores having the above-described pore diameter falls in the above-described range.

In the present invention, a non-oxide-based material is used as the clay material. Specifically, the material used is one type or two or more types of silicon carbide, silicon-silicon carbide based composite material and silicon nitride.

To manufacture the porous honeycomb filter of the present invention, there is added, to the above-described clay material and pore former, an organic binder such as methyl cellulose, hydroxypropoxyl cellulose, hydroxyethyl cellulose, carboxymethyl cellulose, or polyvinyl alcohol, surfactant, water or the like, and a plastic clay is obtained. This clay is extruded and molded into a honeycomb shape having a large number of circulation holes defined by partition walls and extending through the filter in an axial direction. Moreover, this is dried with microwave, hot air or the like.

After this drying, opposite end portions of the circulation holes are plugged. The plugging can be performed by immersing end faces in a slurried plugging material in a state in which circulation holes that are not to be plugged are masked to thereby fill the opened circulation holes with the plugging material.

After the plugging, degreasing is performed by heating the material at about 400°C in the atmosphere. Thereafter, the whole material is fired at about 1400 to 2200°C to prepare the porous honeycomb filter. When the porous honeycomb filter prepared in this manner is disposed. in an exhaust path of an internal combustion engine such as a diesel engine, particulates in the exhaust gas are trapped so that the exhaust gas can be purified.

Examples

The present invention will be described hereinafter in more detail in accordance with examples.

(Example 1)

As a ceramic material, 75 mass% of silicon carbide powder and 25 mass% of metal silicon powder were used. To 100 parts by mass of ceramic material, 10 parts by mass of crosslinked starch having an average particle diameter of 45 $\mu$m were added. Furthermore, methyl cellulose, hydroxypropoxyl methyl cellulose, surfactant, and water were added and mixed, and a plastic clay was prepared by a vacuum clay kneader.
This clay was extruded, and a ceramic molded article was obtained. This ceramic molded article was dried with microwave and hot air, and thereafter degreased at 400°C in the atmosphere. Thereafter, the article was fired at about 1450°C in an argon inactive atmosphere, and there was obtained a porous honeycomb filter made of a metal silicon-silicon carbide composite material and having: a partition wall thickness of 300 $\mu$m; a cell density of 46.5 cells/cm$^2$ (300 cells/square inch); a square section whose side was 35 mm; and a length of 152 mm.

(Example 2)

A porous honeycomb filter having a honeycomb structure was prepared by a similar method by use of a raw material similar to that of Example 1 except that an amount of crosslinked starch powder to be added was set to 15 parts by mass.

(Example 3)

A porous honeycomb filter was prepared by a similar method by use of a raw material similar to that of Example 1 except that 70 mass% of silicon carbide powder and 30 mass% of metal silicon powder were used as a ceramic material, a partition wall thickness was set to 381 $\mu$m, and a cell density was set to 31.0 cells/cm$^2$ (200 cells/square inch).

(Example 4)

A porous honeycomb filter was prepared by a similar method by use of a raw material similar to that of Example 2 except that 5 parts by mass of resin-based pore former were further added to the raw material of Example 2.

(Example 5)

As a ceramic material, 100 mass% of silicon carbide powder was used, methyl cellulose, hydroxypropoxyl methyl cellulose, surfactant, and water were added to the material, and mixed, and a plastic clay was prepared by a vacuum clay kneader.
This clay was extruded, and a ceramic molded article was obtained. This ceramic molded article was dried with microwave and hot air, and thereafter degreased at 400°C in the atmosphere. Thereafter, the article was fired at about 2200°C in an argon inactive atmosphere, and there was obtained a porous honeycomb filter having a honeycomb structure which was made of a silicon carbide material and in which: a partition wall thickness was 300 $\mu$m; a cell density was 46.5 cells/cm$^2$ (300 cells/square inch); one side of a square section was 35 mm; and a length was 152 mm.

(Example 6)

As a ceramic material, 75 mass% of silicon carbide powder and 25 mass% of metal silicon powder were used, methyl cellulose, hydroxypropoxyl methyl cellulose, surfactant, and water were added to the material, and mixed, and a plastic clay was prepared by a vacuum clay kneader.
This clay was extruded, and a ceramic molded article was obtained. This ceramic molded article was dried with microwave and hot air, and thereafter degreased at 400°C in the atmosphere. Thereafter, the article was fired and nitrided at about 1700°C in a nitrogen inactive atmosphere, and there was obtained a porous honeycomb filter made of a silicon nitride material and having: a partition wall thickness of 300 $\mu$m; a cell density of 46.5 cells/cm$^2$ (300 cells/square inch); a square section whose side was 35 mm; and a length of 152 mm.

(Example 7)

A porous honeycomb filter was prepared by a similar method by use of a raw material similar to that of Example 5 except that 5 parts by mass of crosslinked starch having an average particle diameter of 10 $\mu$m were added to 100 parts by mass of ceramic material.

(Example 8)

A porous honeycomb filter was prepared by a similar method by use of a raw material similar to that of Example 6 except that 10 parts by mass of crosslinked starch having an average particle diameter of 45 $\mu$m were added to 100 parts by mass of ceramic material.

(Example 9)

A catalyst (cerium oxide was carried by $\gamma$-alumina) was carried by a honeycomb filter of Example 1.

(Comparative Example 1)

A porous honeycomb filter was prepared by a similar method by use of a raw material similar to that of Example 1 except that an amount of crosslinked starch to be added was set to 18 parts by mass, and 5 parts by mass of resin-based pore former were further added.

(Comparative Example 2)

A porous honeycomb filter was prepared by a similar method by use of a raw material similar to that of Example 1 except that an amount of crosslinked starch to be added was set to 0 part by mass.

(Comparative Example 3)

A porous honeycomb filter was prepared by a similar method by use of a raw material similar to that of Example 7 except that an amount of crosslinked starch to be added was set to 0 part by mass.

(Comparative Example 4)

A porous honeycomb filter was prepared by a similar method by use of a raw material similar to that of Example 8 except that a particle diameter of added crosslinked starch was set to 10 $\mu$m.

Table 1 shows measured results of pore volume, porosity, permeability, pressure loss, and trapping efficiency with respect to Examples 1 to 6 and Comparative Examples 1 to 4 described above. A pore distribution and the porosity were measured by mercury porosimetry.

The permeability was measured by Perm Porometer. That is, a part of a partition wall was extracted from each porous honeycomb filter, and worked so as to eliminate surface irregularity to obtain a sample. This sample was vertically sandwiched by a sample holder having a diameter of 20 mm so that any gas leakage was not generated, and thereafter a gas was allowed to flow into the sample under a specific gas pressure. Moreover, the permeability of the gas passed through the sample was calculated based on the following equation 1.

$$[\text{Equation 1}]$$

$$C = \frac{8FTV}{\pi D^2 (P^2 - 13.839^2)/13.8392 \times 68947.6} \times 10^8 ,$$

wherein C denotes a permeability ($\mu$m$^2$), F denotes a gas flow rate (cm$^3$/s), T denotes a sample thickness (cm), V denotes a gas viscosity (dynes·s/cm$^2$), D denotes a sample diameter (cm), and P denotes a gas pressure (PSI). Moreover, numeric values shown in the equation are 13.839 (PSI) = 1 (atom), and 68947.6 (dynes/cm$^2$) = 1 (PSI).

To obtain the pressure loss of the porous honeycomb filter provided with the catalyst, a difference between pressures before and after a DPF was obtained on conditions that a gas temperature was 25°C, and a gas flow rate was 9 Nm$^3$/min.

To obtain the trapping efficiency, soot was generated by a light oil gas burner, the porous honeycomb filter was disposed on a downstream side of the soot, and the trapping efficiency of the porous honeycomb filter was obtained from a ratio of a soot weight in a gas split at a constant ratio from pipes before and after the porous honeycomb filter.

[Table 1]

|  |  | ≤15 μm pore volume [cc/cc] | ≥40 μm pore volume [cc/cc] | Porosity [%] | Permeability [μm²] | Pressure loss [kPa] | Trapping efficiency [%] |
|---|---|---|---|---|---|---|---|
|  |  | 0.07 or less | 0.07 or less | 40 to 75 | 1.5 or more | 5.5±0.5 | 90 or more |
| Example 1 | Silicon carbide + metal silicon | 0.047 | 0.016 | 50 | 3.4 | 5.5 | 95 |
| Example 2 | Silicon carbide + metal silicon | 0.064 | 0.023 | 60 | 5 | 5.5 | 95 |
| Example 3 | Silicon carbide + metal silicon | 0.039 | 0.007 | 40 | 3 | 5.6 | 97 |
| Example 4 | Silicon carbide + metal silicon | 0.046 | 0.026 | 70 | 6 | 5.5 | 95 |
| Example 5 | Silicon carbide | 0.021 | 0.023 | 38 | 1.8 | 5.9 | 98 |
| Example 6 | Silicon nitride | 0.027 | 0.018 | 38 | 1.4 | 6 | 98 |
| Example 7 | Silicon carbide | 0.065 | 0.010 | 41 | 2.7 | 5.8 | 95 |
| Example 8 | Silicon nitride | 0.010 | 0.044 | 62 | 6 | 5.3 | 95 |
| Example 9 | Silicon carbide + metal silicon (provided with catalyst) | 0.036 | 0.012 | 42 | 3 | 5.7 | 97 |
| Comparative Example 1 | Silicon carbide + metal silicon | 0.013 | 0.075 | 58 | 9 | 5.5 | 80 |
| Comparative Example 2 | Silicon carbide + metal silicon | 0.072 | 0.004 | 35 | 0.8 | 8.5 | 95 |
| Comparative Example 3 | Silicon carbide | 0.072 | 0.003 | 41 | 1.3 | 9 | 95 |
| Comparative Example 4 | Silicon nitride | 0.173 | 0.013 | 41 | 0.6 | 11.6 | 95 |

As shown in Table 1, both the pressure loss and the trapping efficiency indicate satisfactory results in Examples 1 to 9, but the trapping efficiency drops to 80% in Comparative Example 1, and the pressure loss increases to 8.5 kPa, 9 kPa, and 11.6 kPa in Comparative Examples 2, 3, and 4, respectively.

Industrial Applicability

As described above, in a porous honeycomb filter of the present invention, both a pressure loss and a trapping efficiency can be balanced, and the filter is preferably usable in various types of filters, especially a diesel particulate filter.

**Claims**

1.    A porous honeycomb filter having a controlled pore distribution, wherein the porosity is in the range of 40 to 75%, the volume of pores having a pore diameter of 15 μm or less is 0.07 cc/cc or less and the volume of pores having a pore diameter of 40 μm or more is 0.07 cc/cc or less, the porosity and pore distribution being measured by mercury porosimetry, wherein the material of the honeycomb filter is one or two or more of silicon carbide, silicon nitride and silicon-silicon carbide composite material.

**2.** The porous honeycomb structure according to claim 1 wherein the porosity is in the range of 50 to 75%.

**3.** The porous honeycomb filter according to claim 1 or 2, wherein the permeability is 1.5 $\mu$m$^2$ or more.

**4.** The porous honeycomb filter according to any one of claims 1 to 3, wherein a catalyst is carried.

**Patentansprüche**

**1.** Poröser Wabenfilter, der eine kontrollierte Porenverteilung aufweist, worin die Porosität im Bereich von 40 bis 75% ist, wobei das Volumen von Poren, die einen Porendurchmesser von 15 $\mu$m oder weniger aufweisen, 0,07 cm$^3$/cm$^3$ oder weniger beträgt, und das Volumen der Poren, die einen Porendurchmesser von 40 $\mu$m oder mehr aufweisen, 0,07 cm$^3$/cm$^3$ oder weniger beträgt, wobei die Porosität und die Porenverteilung durch Quecksilberporosimetrie gemessen werden, worin das Material des Wabenfilters eines oder zwei oder mehrere von Siliziumkarbid, Siliziumnitrid und Silizium-Silizium-Karbidverbundmaterial ist.

**2.** Poröse Wabenstruktur gemäß Anspruch 1, worin die Porosität im Bereich von 50 bis 75% ist.

**3.** Poröser Wabenfilter gemäß Anspruch 1 oder 2, worin die Permeabilität 1,5 $\mu$m$^2$ oder mehr beträgt.

**4.** Poröser Wabenfilter gemäß einem der Ansprüche 1 bis 3, worin ein Katalysator getragen wird.

**Revendications**

**1.** Filtre en nid d'abeille poreux ayant une distribution de pores commandée, dans lequel la porosité est comprise entre 40 et 75 %, le volume de pores ayant un diamètre de pores égal ou inférieur à 15 $\mu$m est inférieur ou égal à 0,07 cc/cc et le volume de pores ayant un diamètre de pores de 40 $\mu$m ou plus est de 0,07 cc/cc ou moins, la porosité et la distribution de pores étant mesurées par porosimétrie au mercure, dans lequel le matériau du filtre en nid d'abeilles est un ou plusieurs parmi le carbure de silicium, le nitrure de silicium et un matériau composite de silicium-carbure de silicium.

**2.** Structure en nid d'abeilles poreuse selon la revendication 1, dans laquelle la porosité est comprise entre 50 et 75 %

**3.** Filtre en nid d'abeilles poreux selon la revendication 1 ou 2, dans lequel la perméabilité est de 1,5 $\mu$m$^2$ ou plus.

**4.** Filtre en nid d'abeilles poreux selon l'une quelconque des revendications 1 à 3, dans lequel un catalyseur est porté.

FIG.1

FIG.2

FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3272746 B

- JP 2002219319 A